Europäisches Patentamt

European Patent Office

Office européen des brevets

(19)

(11) Veröffentlichungsnummer: **0 324 316**
**A1**

(12) **EUROPÄISCHE PATENTANMELDUNG**

(21) Anmeldenummer: **88810882.6**

(22) Anmeldetag: **21.12.88**

(51) Int. Cl.⁴: **H04M 1/274**

(30) Priorität: **22.12.87 CH 4985/87**
**01.12.88 CH 4455/88**

(43) Veröffentlichungstag der Anmeldung:
**19.07.89 Patentblatt 89/29**

(84) Benannte Vertragsstaaten:
**AT BE CH DE ES FR GB IT LI NL SE**

(71) Anmelder: **ASCOM AUTOPHON AG**
**Ziegelmattstrasse 1-15**
**CH-4503 Solothurn(CH)**

(72) Erfinder: **Berger, Stephan**
**Obere Bündten**
**Oberbuchsiten(CH)**

(74) Vertreter: **Schweizer, Hans et al**
**Bovard AG Patentanwälte VSP**
**Optingenstrasse 16**
**CH-3000 Bern 25(CH)**

(54) **Telefon-Wählanordnung.**

(57) Die Telefon-Wählanordnung besteht in einer einfachen Ausführung aus einem Basisgerät 1 und einer Anzahl biegsamer Karten (2). Beim Gebrauch wird eine der Karten dem Behälter (14) entnommen und in eine Ausnehmung (15) des Basisgeräts gelegt. Diese Karten dienen als kleine mobile Verzeichnisse für vier Teilnehmer. Die vier Zieltasten (18) sind als Folientastatur (181-183) ausgebildet und unter den jeweiligen Schriftfeldern (21a-d) der Karte im Boden der Ausnehmung angeordnet. Sie werden durch Drücken auf das jeweilige Schriftfeld der Karte betätigt. Der elektronische Rufnummernspeicher (192) ist zusammen mit einem Mikroprozessor (191) und einer Leitungs- und Wähleinheit (193) im Basisgerät eingebaut. Die Karten enthalten ausserdem eine Kombination von Kerben 22a-c als 4-Bit-Kartenkennung. Letztere werden von elektromechanischen Fühlern (17) in der Ausnehmung erfasst, und bestimmen zusammen mit den Zieltasten die Speicheradressen der Rufnummern.

Eine verbesserte Ausführung besitzt sieben Karten mit je zwölf Rufnummern und einer optischen 3-Bit-Kennung. Dabei besteht jede Karte aus einem Schriftträger und einer darauf haftenden transparenten Deckfolie, die mehrmals aufgesetzt und wieder entfernt werden kann.

Fig.1

## Telefon-Wählanordnung

Die Erfindung bezieht sich allgemein auf Telefon-Endeinrichtungen mit Anordnungen zum automatischen Wählen von Teilnehmern, die auf einem persönlichen oder besonderen Teilnehmerverzeichnis vermerkt sind, und deren Rufnummern vorgängig in einen entsprechenden elektronischen Speicher eingelesen wurden. Eine bekannte Anordnung dieser Art arbeitet mit Kurzwahlnummern 00, 01, 02...19, die auf einer Karte mit zwanzig Zeilen oder Feldern vorgedruckt sind. Der Benützer trägt darin die Namen seiner wichtigsten Gesprächspartner ein, und er speichert deren Rufnmummer ab, indem er vorher einen Speicherbefehl und die Kurzwahlnummer eingibt. Für die Wahl genügt dann ein Wählbefehl und die Kurzwahlnummer. Ein Beispiel dafür ist die Telefonstation TS 70-RG, welche in der schweizerischen Zeitschrift "Technische Mitteilungen" PTT Nr. 9/1977, Seiten 411-419 beschrieben ist.

Eine auf der Basis des bekannten Strichcodes arbeitende Anordnung zur automatischen Kurzwahl von Hunderten von Teilnehmern ist in der europäischen Patentanmeldung Nr. 88810619.9 (entsprechend US-Serial No.     ) von der Anmelderin dieses Patentgesuchs vorgeschlagen worden.

Da beim Ermitteln und Eingeben der Kurzwahlnummer auf die zuerst erwähnte Art Verwechslungen vorkommen können, hat man die automatische Wahl mittels Zieltasten eingeführt. In der Zeitschrift Bell Laboratories Record, Band 59, Nr. 4, April 1981 (Murray Hill, New Jersey, US) N.R. Hall et al.: "Touch-a-matic S telephone-styled for the residence market", Seiten 117-122, ist ein solcher Apparat beschrieben. Bei diesem wird eine Karte mit zwölf vorgedruckten Feldern in einer Aufnahme an der Oberseite des Apparates befestigt. In jedem Feld befindet sich rechts eine Oeffnung, durch welche eine Zieltaste emporragt; diese Taste bestimmt die Speicheradresse für die Rufnummer sowohl beim Einspeichern als auch beim automatischen Wählen. Nachteilig ist bei diesem Apparat die geringe Kapazität von zwölf Namen bzw. Rufnummern.

Wenn die Zahl der wichtigen Gesprächspartner grösser ist, kann diesem Bedürfnis auf verschiedene Weise entsprochen werden. Am einfachsten ist es, wenn die Oberfläche des Apparates vergrössert wird, so dass nebeneinander mehrere Kolonnen von Zieltasten mit den zugehörigen Namenfeldern angeordnet werden können. Natürlich braucht ein solcher Telefonapparat mehr Platz und kostet mehr. So besitzt ein Wählgerät nach der US-PS 4 275 273 bereits hundert Zieltasten. Um diese auch für noch mehr Rufnummern verwenden zu können, wird mit den zwischen den Tastenreihen angebrachten Papier-Namensstreifen in die dritte Dimension ausgewichen. Die Streifen werden von Hand in Ablesestellung gebracht, wodurch gleichzeitig die Tastensignale zwischen den Hunderter-Speicherbereichen umgeschaltet werden. In der US-PS 4,661,976 wird ein "elektronisches Telefonbuch" als Zusatzgerät zum eigentlichen Telefonapparat vorgeschlagen. Zwischen zwei Kolonnen von Zieltasten befindet sich eine Aufnahme für ein in Kolonnen und Zeilen eingeteiltes Ringbuch. Seine Blätter sind in der Art eines Griffregisters mit je einer im aufgeschlagenen Zustand rechts oder links hervorragenden Fahne versehen. Je nachdem, auf welcher Seite das Buch aufgeschlagen ist, ragen links unten oder rechts oben mehr Fahnen heraus, und diese Verteilung wird mittels zweier Reihen Fotoempfängerzellen unter den Fahnen abgetastet und als Information über die Seitennummer an die Zentraleinheit geliefert. Die Zeileninformation entsteht, sobald eine der Zieltasten betätigt wird. Entsprechend werden die Speicher beim Einspeichern oder automatischen Wählen adressiert.

Es liegt auf der Hand, dass solche Zusatzgeräte verhältnismässig aufwendig sind. Das gleiche gilt für zahlreiche weitere Vorschläge, bei welchen zum Teil die elektrische Seiteninformation der Verzeichnisse noch mechanisch von Hand eingestellt werden muss, beispielsweise nach den US-PS 4 278 845 oder 4 595 798.

Die vorliegende Erfindung hat zur Aufgabe, die Zieltastaturwahl für eine praktisch beliebig hohe Zahl von Rufnummern mit kleinerem Aufwand als bisher zu ermöglichen.

Eine weitere Aufgabe besteht darin, ein Rufnummernverzeichnis in der Form eines Satzes einzelner frei beweglicher Karten zu schaffen, in welche der Benützer die Rufnummern, Namen oder andern Kennzeichen wichtiger Gesprächspartner eintragen kann. Demgegenüber befasst sich die Erfindung speziell mit der Schaffung einer Telefon-Wählanordnung nach dem Oberbegriff des Patentanspruchs 1, und sie löst die gestellte Aufgabe nach dem Kennzeichen dieses Patentanspruchs. Da jeweils nur die Kennung einer einzigen ganz einfachen Karte erfasst werden muss, vermindert sich der dafür erforderliche Aufwand so erheblich, dass die Bedürfnisse neuer Benützerkreise damit erfüllt werden können.

Eine besonders wichtige Aufgabe ist, zu ermöglichen, dass die Zielwahltaste durch die Karte hindurch genau an der Stelle gedrückt werden kann, wo der gewünschte Gesprächspartner vermerkt ist.

Dies wird durch die im Patenanspruch 2 gekennzeichneten Merkmale erreicht. Es ergibt sich, dass Verwechslungen zwischen aufgesuchtem Feld entsprechend dem gewünschten Gesprächspartner und der betätigten Zieltaste nicht mehr vorkommen.

Es ist allerdings aus der europäischen Patentanmeldung Nr. 158294 bei einem Telefonanrufbeantworter bekannt, verschiedenartige elastische Bedienerfolien auf die Tastatur zu legen, um mehrere unterschiedliche Schaltfunktionen mit der gleichen Tastatur ausführen zu können. Als Beispiel nennt die Schrift Bedienerfolien für die Eingabe einer Fernabfrage-Codezahl, für das Aufsprechen eines Ansagetextes auf Tonband, für das Eingeben der Uhrzeit und für die Eingabe von Rufnummern. Im letzteren Falle wird nach Auflegen der Bedienerfolie durch diese hindurch die Taste "Rufnummer" betätigt, hierauf die normale Zifferntastatur für die vielstellige Rufnummer und schliesslich die Taste "Eingabe"; bei mehreren Nummern erfolgt diese Prozedur mehrmals. Wenn dann ein Anruf kommt, wählt der Telefonanrufbeantworter selbständig die eingespeicherte Rufnummer oder nacheinander die eingespeicherten Rufnummern an und verbindet den Anrufer mit der vom Anrufbeantworter angewählten Rufnummer; auf diese Weise merkt der Anrufer vielleicht gar nicht, dass der Angerufene beispielsweise nicht im Büro ist, sondern zuhause. Es handelt sich also um eine ganz normale Telefonanruf-Weiterschaltungsanordnung. Für eine Abwandlung solcher Bedienerfolien in einen Satz von - abgesehen von der Kennung - stets gleichen Karten mit nur Teilnehmer-Namenfeldern fehlt jede Anregung in der zitierten Schrift. Jede Bedienerfolie des Anrufbeantworters ist anders beschriftet und gibt eine stets wieder andere Auswahl von Tasten zur Betätigung frei. Auch ist der Aufwand für den Anrufbeantworter beträchtlich grösser als für eine Wählanordnung gemäss der vorliegenden Erfindung.

Ebensowenig liefert eine Anordnung zur Mehrfachausnutzung von Bedientasten nach der deutschen Offenlegungsschrift Nr. 34 32 270 Anhaltspunkte für die vorliegende Erfindung. Dort dient eine einzige von Hand verschiebbare, aber im übrigen fest angebrachte Abdeckplatte zur Umschaltung zwischen der 1.,3.,5. ....9. Zeile oder Doppelfeldreihe und der 2.,4.,...10. Zeile; gleichzeitig werden die Signale der beiderseits der Felder angebrachten 2x5 Zieltasten auf je entsprechende der 20 Speicheradressen elektromechanisch umgeschaltet.

Weitere Vorteile der Erfindung ergeben sich bei Ausführungsarten nach den weiteren Patentansprüchen.

Die Erfindung wird im folgenden an Hand von Beispielen mit Zeichnungen beschrieben. Es zeigen in vereinfachter Darstellung

Fig. 1 eine erste Ausführung mit Karte, Schaltung und Ansicht des Telefonapparates.

Fig. 2 eine zweite Ausführung mit Ansicht eines Schnittes durch Apparat und Karte längs der Linie A-A von Fig. 3.

Fig. 3 Draufsicht auf einen unteren Teil der Karte von Fig. 2

Fig. 4 Ansicht von unten auf einen oberen Teil der Karte von Fig. 2.

Fig. 5 eine erste Herstellphase einer unteren Folientastatur-Folie in Draufsicht.

Fig. 6 eine zweite Herstellphase derselben Folie wie Fig. 5.

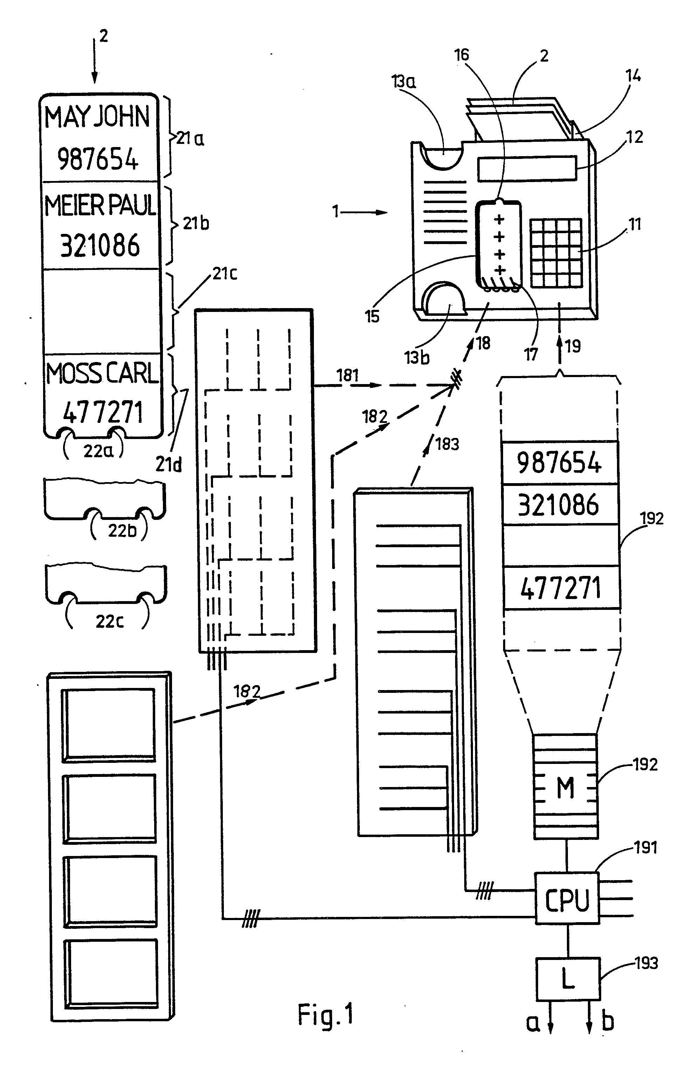

Die Telefon-Wählanordnung nach der Fig. 1 besteht aus einem Telefonapparat 1 und einer Anzahl Karten 2. Der Telefonapparat besitzt wie üblich Zahlen- und Steuertastatur 11, Display 12 und Ablegemulden 13a und 13b für den nicht gekennzeichneten Handapparat.

Zusätzlich angebracht sind nun noch ein Fach 14 zum Aufbewahren einiger Karten 2, sowie eine nach oben offene, flache Ausnehmung 15, zum Einlegen einer genau hineinpassenden Karte 2. An einer Schmalseite der Ausnehmung 15 ist der vertikale Rand an einer Stelle 16 eingesenkt, um eine eingelegte Karte leicht mit dem Finger herausnehmen zu können. An der anderen Schmalseite befinden sich vier elektromechanische Fühler 17 für den Rand der Karte 2. Im Boden der Ausnehmung 15 sind vier Folientastatur-Zieltasten 18 untergebracht; deren Lage ist durch vier Kreuze " + " angedeutet. Die aufeinander folgenden drei Schichten der Folientastatur sind in der linken untern Hälfte der Zeichnung dargestellt: Die biegsame Oberschicht 181 trägt an ihrer Unterseite ein erstes Kontaktleitungsmuster; darunter folgt ein Abstandsgitter 182 und zuunterst die feste Tragschicht 183 mit dem Gegenkontakt-Leitungsmuster. Die übrige elektronische Schaltung 19 ist ebenfalls nach unten herausgezeichnet; sie kann an beliebiger Stelle im Telefonapparat 1 untergebracht sein. Sie enthält eine Steuereinheit 191 (Central Processing Unit CPU) und einen Speicher 192 (Memory M), sowie eine Leitungs- und Spracheinheit 193 (L) zum Anschluss der Zentralenleitung a, b und des Telefon-Handapparats.

Die Karte 2 ist auf ihrer Oberseite durch Vordruck in vier gleichgrosse, beschreibbare Felder 21 a,b,c,d eingeteilt. Diese Einteilung stimmt überein mit der Anordnung der vier Zieltasten 18 gemäss den vier Kreuzen in der Ausnehmung 15, auch erkennbar in den Kontaktleitungsmustern der Schichten 181 und 183 und den Löchern des Abstandsgitters 182. Diese Karte 2 ist derart biegsam, dass durch sie hindurch die Oberschicht 181 auf die Tragschicht 183 gedrückt und damit der betreffende Zieltastenkontakt geschlossen werden kann. Vordruck und Beschriftung der Karte 2 kann auch mit Hilfe einer Klebefolie auf der Karte 2 angebracht sein.

Am unteren kurzen Kartenrand sind nun bei jeder Karte 2 zwei Kerben 22a, 22b, und 22c in wechselnder Kombination ausgespart, deren Einteilung mit den vier Fühlern 17 in der Ausnehmung 15 übereinstimmt. Die im Binärocode ohne Null möglichen 12 weiteren Karten sind nicht dargestellt. Damit lassen sich 15 Karten mit einer individuellen Kennung versehen und somit 60 Teilnehmernamen und -nummern in die je vier Felder 21 eintragen. Drei Beispiele solcher Namens-Eintragungen sind in der Zeichnung angegeben. Es ist auch die den beschrifteten Feldern 21a, 21b und 21d entsprechende Belegung des vergrössert nach oben herausgezeichneten Speichers 192 gezeigt, wobei die durch den Code der Kerben 22a, 22b und 22c bestimmten Speicheradressen weggelassen sind. Dieser Speicher muss in diesem Falle Speicherplatz für 60 zu wählende Teilnehmernummern aufweisen.

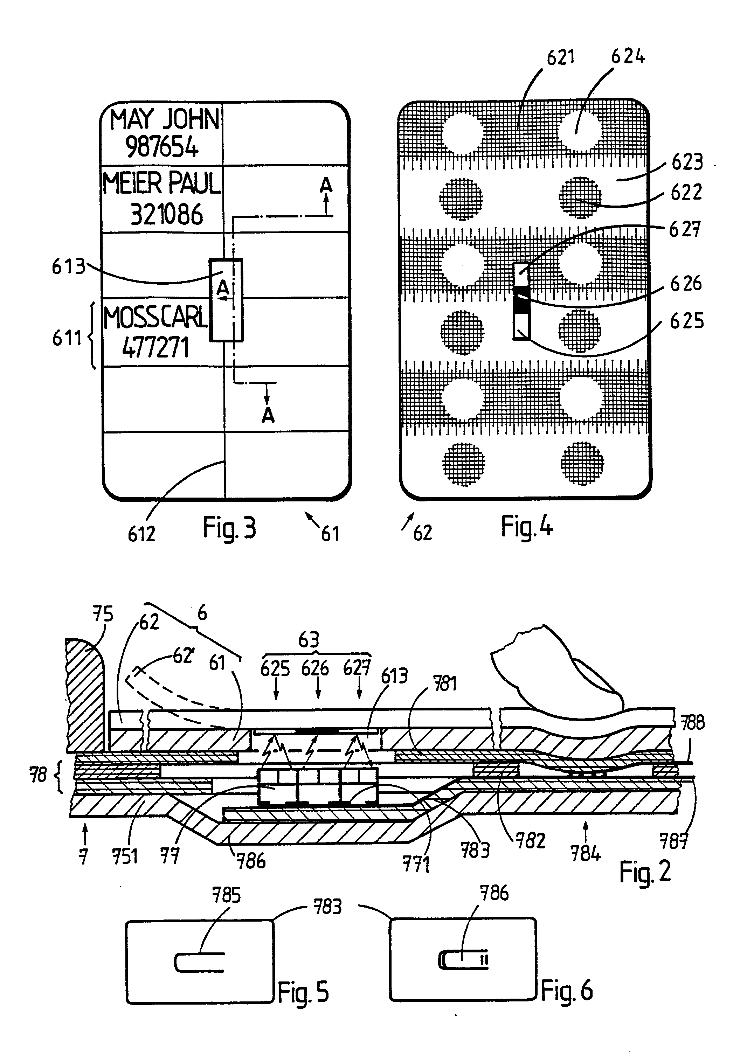

In diesem ersten Beispiel wurde die Karte 2 aus zeichnerischen Gründen in nur vier Felder 21c-d unterteilt; in der praktischen Anwendung, zum Beispiel gemäss der Ausführung Fig. 2-6 wird jedoch eine Karte von 6x10 cm Grösse in zwei Kolonnen mit je sechs Feldern 61, d.h. 12 Felder eingeteilt. Mit einem Satz von bis zu sieben Karten pro Apparat können so die Anforderungen der meisten Privatpersonen oder -haushalte oder Kleinfirmen an ihr individuelles Rufnummernverzeichnis mit bis zu 84 Namen sehr wirtschaftlich erfüllt werden.

Die Ausführung nach den Fig. 2 bis 6 weicht noch anderweitig von derjenigen in Fig. 1 ab.

Wie in Fig. 2 ersichtlich, besitzt die Karte 6 einen festen Schriftträger 61 für die Eintragungen des Benützers sowie eine darauf haftende transparente Deckfolie 62. Ferner wird die Kennung der Karte 6 durch eine Reflexlichtschranken-Anordnung 63 erfasst, wobei ein 3-Bit-Code für den erwähnten Satz von sieben Karten pro Apparat genügt.

Der Schriftträger 61 besteht aus weissem Halbkarton und enthält gemäss Fig. 3 längs dem zur Begrenzung der Felder 611 aufgedruckten Liniennetz 612 einen rechteckigen Ausschnitt 613, der zum Durchtritt der Strahlen der Lichtschranken-Anordnung 63 dient. Die Deckfolie 62 besitzt wie in Fig. 4 angedeutet auf ihrer Oberseite ein der Feldereinteilung 611 entsprechendes Muster einer leichten Farbtönung 621, 622, Fig. 4, abwechselnd mit ungefärbten Stellen 623, 624. In einem Satz Karten können zur visuellen Unterscheidung z.B. in dem Fach 14 Fig. 1 sieben unterschiedliche Farbtönungen angewandt werden. Die in Fig. 4 abgebildete Unterseite der Deckfolie 62 weist ausser dem Haftbelag den dreiteiligen optischen Code 625, 626 und 627 auf, im vorliegenden Fall zwei reflektierende Flächen 625 und 627 und dazwischen eine absorbierende schwarze Fläche 626.

Der Haftbelag ist von der Art, wie sie von Notizzetteln POST-IT (TM) von 3M allgemein bekannt ist, und welcher erlaubt, die Deckfolie 62 mehrmals auf den Schriftträger 61 zu heften und wieder wegzunehmen, z.B. bei Ergänzungen des Rufnummernverzeichnisses auf der Karte 6, ohne dass Beschädigungen auftreten. Dies ist in der Fig. 2 durch das gestrichelt gezeichnete aufgebogene Stück 62' der Deckfolie 62 angedeutet Ferner ist die Farbtönung 621, 622 so schwach oder transparent, dass bei zusammengesetzter Karte 6 die Beschriftungen auf dem Schriftträger 61 noch gut durch sie hindurch lesbar sind.

In der Schnittansicht Fig. 2 ist ein Teil des im allgemeinen nach der Fig. 1 aufgebauten Apparates 1 bzw. 7 mit aufgelegter Karte 6 dargestellt. Links in der Fig. 2 erscheint noch der abgerundete Rand 75 der Ausnehmung (15 in Figur 1). Wie in Fig. 1 besteht die Folientastatur 78 aus der Oberschicht 781, dem Abstandsgitter 782 und der Tragschicht 783, allerdings mit der Besonderheit, dass in ihr auch die drei gleichen Sender/Empfänger-Einheiten 77 der Reflexlichtschranken-Anordnung 63 untergebracht sind. Zu diesem Zwecke ist die ebenfalls zum Apparategehäuse zu zählende Stützplatte 751, mittels welcher die Folientastatur 78 von unten her am Rand 75 befestigt wird, nach unten ausgebaucht. Die zur Zeit erhältlichen optischen Infrarot-Sender/Empfänger-Einheiten, z.B. von Honeywell Type HSR 100, beanspruchen nämlich mehr Tiefe als die Folienkontakte 784, deren einer in betätigter Stellung gezeigt ist. Der Tageslichteinfluss auf die Sende-/Empfängereinheit wird mit zwei Massnahmen sehr stark eingegrenzt. 1. Durch Anbringen eines Tageslichtfilters vor den Empfängern, 2. durch Massnahmen bei der Senderansteuerung.

Die Fig. 5 und 6 zeigen, wie durch einen einfachen Stanzvorgang in der Tragschicht 783 zuerst ein U-förmiger Schnitt 785 angebracht, dann der entstandene Lappen 786 nach unten abgekröpft wird. Er passt dann beim Verkleben der Tragschicht 783 mit der Stützplatte 751 gut auf die letztere. Möglicherweise werden künftig erhältliche niedrigere Sender/Empfänger-Einheiten die genannten Abkröpfungen überflüssig machen. Vor dem Zusammenbau der Folientastatur 78 werden noch die Sender/Empfänger-Einheiten 77 in Oberflächenmontage (Surface Mounted Technology) an den Lötstellen 771 mit dem Leitungsmuster 787 verbunden, welcher letzteres mit dem Gegenleitungsmuster 788 dem Folienkontakt 784 bildet. Da die Oberschicht 781 ohnehin lichtdurchlässig ist, muss bloss dafür gesorgt werden, dass keine Leiterbahnen des Gegenleitungsmusters 788 den Lichtweg stören. Dies ist in Fig. 2 durch Weglassen der Schraffur angedeutet.

In dieser Figur sind zwecks Verdeutlichung die vertikalen Abmessungen gegenüber den horizontalen stark vergrössert dargestellt; als Richtlinie diene die Angabe, dass die Karte 6 und die Folientastatur 78 - ohne Abkröpfung gerechnet - je etwa 0,7 mm dick sind. Damit ergeben sich günstige Verhältnisse für die erforderliche Durchbiegung beim Betätigen der Zieltasten. Wie bei Tastaturen üblich, zeigt ein kurzer Ton an, ob die Betätigung korrekt erfolgt ist.

Die beim Herstellen der vorstehend beschriebenen Telefon-Wählanordnungen auszuführenden Arbeitsgänge wie Stanzen, Pressen, Bedrucken, Verkleben, Löten usw. sind weitgehend automatisierbar, so dass sich eine wirtschaftliche Massenfabrikation einrichten lässt. Einzig die Kartenkennung muss jeweils nach einem Teil der Auflage geändert werden, was aber für die betreffenden Automaten der Produktionslinie leicht programmierbar ist.

Die Bedienung einer solchen Wählanordnung ist leicht erlernbar. Sie umfasst folgende Schritte:

A. Einspeichern neuer, auf den Karten 2,6 verzeichneten Rufnummern:

1. Die eventuell belegte Leitung a, b freigeben, d.h. Handaparat auf die Mulden 13a, b legen;

2. Karte 2, 6 in die Ausnehmung 15, 615 einlegen. Die Fühler 17 bzw. Lichtschranken 63 erfassen die der Kerbung 22a, b, c bzw. den Reflexflächen 625, 627 entsprechende Kartenkennung und veranlassen dadurch die Adressierung eines bestimmten Bereichs im zentralen Speicher 192;

3. Auf das neu zu speichernde Feld 21a-d bzw. 61 drücken: Der entsprechende Speicherplatz wird durch die unter dem Feld liegende Zieltaste 18, 784 adressiert;

4. Eine eventuell schon früher gespeicherte Rufnummer wird am Display 12 angezeigt, wodurch sich weiteres erübrigt;

5. Wenn keine Rufnummer angezeigt wird, die neue Rufnummer mittels der Tastatur 11 eingeben und durch Betätigen einer Steuertaste einspeichern.

B. Wählen einer im Speicher 192 eingespeicherten Rufnummer:

1. Karte in die Ausnehmung 15, 615 einlegen;

2. Leitung a, b belegen durch Abheben des Handapparats;

3. nach Erscheinen des Summtons auf das zu wählende Feld drücken; alles Weitere geschieht automatisch.

Auch hier dient das Display 12 zur Ueberwachung des Vorgangs.

Die Erfindung kann in besonderen Fällen noch auf andere Art ausgeführt werden. So können die Zieltasten auch seitlich neben der Ausnehmung angeordnet werden, wodurch einfache, nicht speziell biegsame Karten mit optischer oder anderer Kennung verwendet werden können. Diese Kennung kann auch an andern Flächen oder Stellen der Karte als beschrieben angebracht werden; ebenso eine Farbtönung. Aus Platzgründen wird darauf verzichtet, solche Varianten im einzelnen darzustellen.

## Ansprüche

1. Telefon-Wählanordnung zum automatischen Wählen persönlicher, vorgängig eingespeicherter Rufnummern, umfassend

a) einen Satz blattförmiger Informationsträger (2;6), auf denen eine bestimmte Zahl und Anordnung von Feldern (21a-d;611) vorgegeben sind, in welchen Rufnummern, Namen oder andere Kennzeichen wichtiger Teilnehmer eingetragen werden können, wobei jeder Informationsträger (2;6) an stets gleicher Stelle eine von jedem andern Informationsträger (2;6) des Satzes unterschiedliche maschinenlesbare Kennung (22a,b, c;625-27) aufweist;

b) ein Telefonapparat (1;7) mit einer Aufnahme (15;75) zum Einlegen mindestens eines Informationsträgers (2;6), mit einer Anordnung von Zieltasten (18;784) und Lesevorrichtung (17;63), welche der Anordnung der Felder (21a-d;611) bzw. der Kennung (22a,b,c;625-27) am Informationsträger (2;6) zur Lage der Aufnahme (15;75) entspricht;

c) elektronische Speichermittel (192) mit mindestens soveilen Speicherplätzen als der Summe der Felder (21a-d;611) auf allen Informationsträgern (2;6) des Satzes entspricht, wobei die gelesenen Kennungen (22a,b,c;625-27) und die Signale der Zieltasten (18;784) die Adressen der Speicherplätze bestimmen; und

d) eine Steuereinheit (191) mit Leitungs- und Spracheinheit (183), zum Steuern der Lese-, Speicher-, Wähl-und Sprachvorgänge, dadurch gekennzeichnet,

e) dass der Satz aus einer Reihe einzelner, voneinander unabhängig hantierbarer Karten (2;6) besteht, und

f) dass die Aufnahme (15,75) und die Lesevorrichtung (17;63) für das Einlegen bzw. Ablesen von einer einzigen Karte (2;6) des Satzes gleichzeitig eingerichtet sind, ebenso die Steuereinheit (191).

2. Wählanordnung nach Patentanspruch 1, dadurch gekennzeichnet, dass die Aufnahme (15;75) eine zum Einlegen der Karte (2;6) bestimmte nach oben offene Ausnehmung (15;75) ist, in deren Boden die Zieltasten (18;784) so angebracht sind, dass sie sich bei eingelegter und in diesem Falle biegsamer Karte (2;6) hinter und innerhalb der beschriftbaren Fläche der Felder (21,611) befinden.

3. Karte (2;6) zur Verwendung in einer Wählanordnung nach Patentanspruch 1 oder 2, dadurch gekennzeichnet, dass sie einen festen Schriftträger (61) aufweist, auf dessen heller Oberfläche ein Liniennetz (612) zur Begrenzung der Felder (611) aufgedruckt ist, und dass über dem Schriftträger (61) eine transparente Deckfolie (62) angebracht ist, deren klebende Unterseite mehrmals auf der Oberseite des Schriftträgers (61) aufsetzbar und ablösbar ist, ohne dass Beschädigungen auftreten.

4. Karte nach Patentanspruch 3, dadurch gekennzeichnet, dass an der Deckfolie (62) ein zusammenhängendes Muster von optisch reflektierenden und/oder absorbierenden Kennungsflächen (625-27) angebracht ist, und dass an diesem Muster entsprechender Stelle im Schriftträger (61) ein Lichtdurchlass (613) ausgespart ist, vorzugsweise längs einer Feld-Trennlinie.

5. Wählanordnung nach Patentanspruch 2, dadurch gekennzeichnet, dass bei Verwendung einer Karte (6) nach Patentanspruch 4 der Boden der Ausnehmung (75) durch eine Folientastatur (78,781-83) gebildet wird, welche im Zwischenraum des Abstandsgitters (782), zwischen Oberschicht (781) und Tragschicht (783), eine Anordnung von optischen Sendern/Empfängern (77) enthält, wobei deren Anordnung mit derjenigen der optischen Kennungsflächen (625-27) der Karte (6) korrespondiert und die Oberschicht (781) mindestens an dieser Stelle für die Strahlung der Sender/Empfänger (77) durchlässig ist.

MAY JOHN
987654
21a

MEIER PAUL
321086
21b

21c

MOSS CARL
477271
21d

22a

22b

22c

2

1

16
2
14
13a
12
11
15
13b
18
17
19

181

182

182

183

987654
321086

477271
192

M
192

CPU
191

L
193

a    b

Fig.1

Fig. 3

Fig. 4

Fig. 2

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | BELL LABORATORIES RECORD, Band 59, Nr. 4, April 1981, Seiten 117-122, Murray Hill, New Jersey, US; N.R. HALL et al.: "TOUCH-A-MATIC'S telephone-styled for the residence market" * Seite 119, Spalte 1, Zeile 5 - Seite 120, Spalte 1, Zeile 14; Seite 121 * --- | 1,2 | H 04 M 1/274 |
| A | EP-A-0 158 294 (COMPUR ELECTROMIE) * Seite 3, Zeilen 19-30; Seite 7, Zeilen 20-32 * --- | 3 | |
| A | EP-A-0 025 254 (CHIOU PUCHI) * Seite 4, Zeile 1 - Seite 9, Zeile 18; Figuren * --- | 1,2 | |
| A | DE-C-3 432 270 (TELEFONBAU UND NORMALZEIT) * Seite 5, Zeile 17 - Seite 6, Zeile 41; Figuren * ----- | 1,2 | |

**RECHERCHIERTE SACHGEBIETE (Int. Cl.4)**

H 01 M

Der vorliegende Recherchenbericht wurde für alle Patentansprüche erstellt

| Recherchenort | Abschlußdatum der Recherche | Prüfer |
|---|---|---|
| DEN HAAG | 04-04-1989 | KEPPENS P.M.R. |